# EUROPEAN PATENT APPLICATION

(11) **EP 2 071 500 A1**
(43) Date of publication of application: **17.06.2009**
(21) Application number: 07822963.0
(22) Date of filing: 04.10.2007
(51) Int. Cl.: G06Q 10/00, G08B 1/08

(54) **SYSTEM FOR LOCATING AND TAKING INVENTORY OF OBJECTS**

(30) Priority: 05.10.2006 ES 200602532
(71) Applicant: Gema Active Business Solutions, S.l., Ripollet. Barcelona (ES)
(72) Inventor: PALLARÉS NADAL, Sergio, 08192 St. Quirze del Vallès (Barcelona) (ES); ORTIZ LÓPEZ, José, 08190 Sant Cungat del Vallès (Barcelona) (ES)
(74) Representative: Isern-Jara, Nuria
(86) International application number: PCT/ES2007/000556
(87) International publication number: WO 2008/040829

(57) **Abstract**

System that includes individual identifying devices (1) that communicate using radio frequency and are associated with objects (2) to be located or Included in an inventory, and at least one initialising device (3) for storing the values of the barcode (21) of the object (2) in the corresponding identifying device (1) using radio frequency transmitters compliant with the IEEE 802.15.4 standard. The identifying devices (1) can also be located by transmission and reception antenna stations (4) distributed throughout the facilities to be controlled, such as a shopping centre or airport. The identifying device (1) consists of a casing that can be attached to the object (2) or merchandise using securing devices (11), containing the transmitter (12), a memory (13), a battery (14) and other elements. The initialising device (3) has a casing containing the radio frequency transmitter (31), a a microcontroller (32), a barcode reader (33) and other elements.

## Description

### Purpose of the invention

This Invention relates to a system for taking inventory of and/or locating inventoried objects using radio frequency data transmission.

### Background of the Invention

At present, barcode identification is commonly used for merchandise control at shopping centres, object management at logistics centres and baggage monitoring at airports. These barcodes define a numerical code that is unique for the type of product or for each container or object. Using an optical barcode reader, this number is sent to a computer to identify the corresponding product or object according to a database stored on a remote networked computer that carries out the necessary processes.

Nevertheless, this identification system is not the most appropriate for taking inventory and monitoring object and merchandise movements in a streamlined manner as is needed for logistical tracking or baggage handling at airports. This is due to the fact that in order to identify an object, it is necessary for a person with a reader to read the barcode attached to the object or suitcase individually, not In an automatic or remote manner.

Another matter to bear in mind is the security of such objects. For example, most shopping centres use physical devices as anti-theft alarms. These consist of plastic casings with electronic circuits inside that are compatible with electromagnetic surveillance panels at the exits. These devices are incorporated into point of sale work processes so that they are attached to the product when it arrives and are removed when it is paid for. It is therefore possible to know when the tagged object arrives and when it leaves but it is not possible to know its location inside the facilities. Its use is limited to anti-theft alarms and it cannot be used as an Identifier or locator.

Another situation in which product and merchandise identification can be problematic is for taking inventory of the different areas of shopping centres. One of the following processes tends to be used:
- A specific area of the shopping centre is closed for a few hours and its employees do the stocktaking using barcode scanner guns.
- The company hires external staff and carries out the stocktaking outside opening hours.

In both cases, the added cost of stocktaking for the company is considerable and requires the temporary immobilisation of merchandise that is on sale or in transit.

In the case of airports, there is no identifier that makes it possible to take inventory of and locate passengers' baggage in a simple manner while it is being handled. Airport baggage handlers or logistics managers periodically check suitcases that have not been collected, read their barcodes and pass on such Information to the relevant airline. These suitcases also tend to be checked when being loaded onto or unloaded from an airplane, although if any suitcases are lost, there are no effective locating systems.

There are also wireless identification systems (RFID - radio-frequency identification) based on programmed or programmable chips that can be easily read using a device with a suitable radio-frequency transmitter on applying the reading antenna to the RFID chip, In a similar way to anti-theft alarms. These chips can be preprogrammed and therefore it is necessary to use a database mapping equivalences between the barcodes and RFID codes. Nevertheless, these chips have two serious drawbacks: 1) The reading of these chips is not very, or is not at all reliable over distances greater than half a metre; 2) They can be tampered with as they come as self-adhesive labels.

### Description of the Invention

The object inventory and locating system of this invention has special technical features that are aimed at Improving the Inventory identification or locating operation by using remote radio frequency reading technologies that allow operation in facilities that are currently in use without having to close off the area or shut down the merchandise handling process and such identification complies fully with current barcode identification systems.

In fact, efforts have been made to ensure that the present system allows information stored on commonly used barcodes to be managed easily and remotely. This is achieved by using identifying devices that are associated with the objects, suitcases and products, which allow remote radio frequency transmission of the data stored in a memory matching the attached barcode. These identifying devices use IEEE 802.15.4 transmission modules to record, read and locate the objects with which they are associated in such a way that they can be controlled through reader or initialising devices or through a network of stations that divide the control area into a series of zones of influence in which the identifying device and the associated object are easily located.

For this purpose, the identifying device comprises a casing that can be attached to the object or merchandise to be identified using removable securing devices. This casing contains a radio frequency transmitter compliant with the IEEE 802.15.4 standard and a memory. The device is powered by a battery or electric cell and displays the operating status via external indicators. Given the low consumption of this type of transmitter, the battery (for example, a lithium battery) may last several years.

In order to manage these identifying devices, the system includes at least one initialising device that comprises a radio frequency transmitter compliant with the IEEE 802.15.4 standard, a microcontroller with memory, a barcode reader, a display screen and a power source inside the casing. The initialising device allows data from the conventional barcode accompanying or attached to the object or merchandise to be recorded in the identifying device's memory. Such data is recorded by radio frequency transmission. Therefore, the identifying device makes it possible to supply the same identification as the barcode of the object or merchandise by radio without having to directly read the barcode with an optical reader. The power source for the initialising device can be a rechargeable battery and charger that can be connected to the conventional power supply when the initialising device is not being used.

The existing network of stations with conventional transmission and reception antennas may be used or a new network may be created with stations distributed throughout the area where the object or merchandise is to be located or included in an inventory, such as an airport or shopping centre. This network of stations allows the reading of several identifying devices and therefore one antenna (fixed or mobile) can read all the devices located around it at any given time (approximately within a typical radius of 30 metres). Using the network of stations that covers the area of a shopping centre or airport, it is easy to detect the location of an object or suitcase as the identifying device of each object or suitcase connects to the transmission and reception antenna, of the WiFi type, for example, of the nearest station; therefore, it is easy to see in which area the item is located to facilitate its retrieval (for example, using a manual initialising device with a reduced range), even if the facilities or covered area are of a considerable size.

Since the identifying code stored in the memory of each identifying device matches the barcode of the object or merchandise, it can be tracked using the same database as is conventionally used for taking inventory or tracking, without having to adapt duplicated databases as a result of different types of codes.

The construction of the identifying device is simple and it is proposed that it can be reused for different products. Its electronic management program or software includes a battery charge sensor that sends a message to the receiver when battery power is low. Also, the securing device used depends on the object or merchandise with which it is to be associated. For example, it may consist of a security pin or similar in the case of shopping centres whereby the pin may only be removed using the appropriate tool when the item is paid for. In the case of airports or logistics centres, the securing device may be an interchangeable security strap.

In order to save battery power for the identifying device, the electric circuit of the device has two switches. One closes when the staple to secure the device to the Inventory object is attached, using for this purpose the magnetic effects of a metal staple, for example, or pressure on a micro switch, or any other available mechanism. The other switch closes when it receives the radio frequency stimulus transmitted directly or indirectly from the initialising device. The battery shall only supply power to the circuit when both switches are closed at the same time.

The initialising device includes on-off and run controls and, in addition to the information displayed on the screen, gives confirmation of the executed operation via an element such as a sound or light indicator.

### Description of the figures

To complement the above description and make it easier to understand the characteristics of the invention, this descriptive report is accompanied by a set of drawings, for illustration purposes only, showing the following:

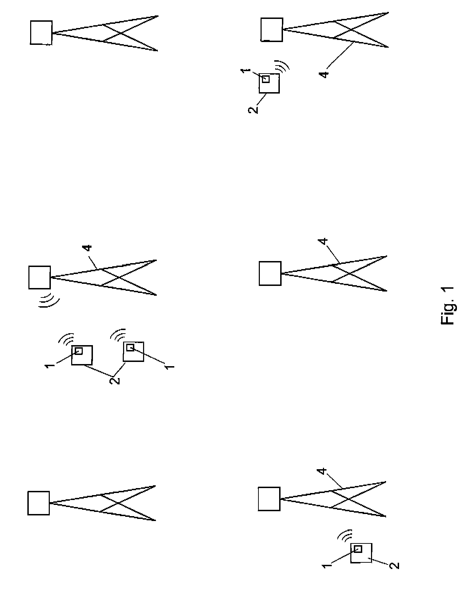

- Figure 1 shows an operating diagram of the system with a network of antennas allowing different objects and merchandise to be located.
- Figure 2 shows a block diagram of an initialising device.
- Figure 3 shows a view of an initialising device.
- Figure 4 shows a block diagram of an identifying device.
- Figure 5 shows an image of a suitcase to which an identifying device has been attached using a strap.
- Figure 6 shows an image of a garment to which an identifying device has been attached using a security pin.

### Preferred embodiment of the invention

As can be observed in the aforementioned figures, the system consists mainly of individual identifying devices (1) that communicate using radio frequency, are programmable and are individually attached to the object (2) or product to be identified; at least one initialising device (3) to program the identifying devices (1) with the same value as the barcode (21) on the object (2) or product, or that is attached as a label (22) or as a similar means when the object (2) starts being controlled by the system; and a network of stations (4) with compatible transmission and reception antennas. These stations (4) are distributed throughout the area or zone where locating or inventory control is required.

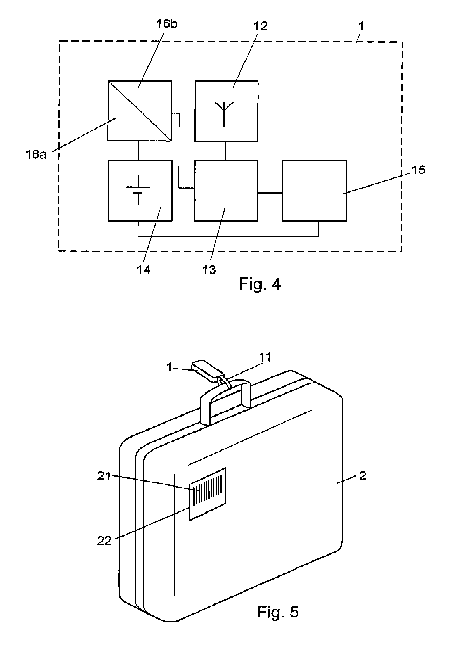

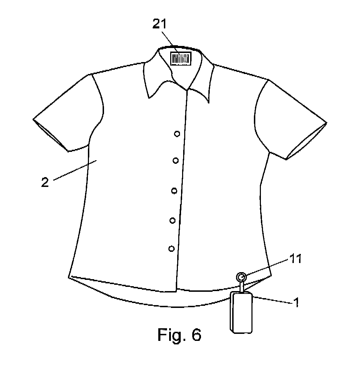

Each identifying device (1) consists of an external casing that has removable securing devices (11) to enable it to be temporarily attached to the object (2) or merchandise and an internal electronic circuit. Figure 5 shows how the securing device (11) can be an interchangeable security strap to secure the device to a suitcase handle. In the option shown in figure 6, the securing device (11) can be a security pin connected to a tamper-proof system on an item of clothing.

The internal electronic circuit of the identifying device (1), shown in figure 4. comprises a radio frequency transmitter (12), compliant with the IEEE 802.15.4 standard, a data storage memory (13), a battery (14) or electric cell intended to last several years, and a charge sensor (15) to notify the nearest station (4) of a low battery power situation.

In order to save battery (14) power for the identifying device (1), the electric circuit has two power supply switches (16a, 16b). One switch (16a) is associated with the securing device (11), such as the pin or strap, using the magnetic effects of a metal pin or mechanical pressure or similar. The other switch (16b) closes when it receives the radio frequency stimulus transmitted directly or indirectly from the initialising device (3). The battery (4) only supplies power when both switches (16a, 16b) are closed at the same time.

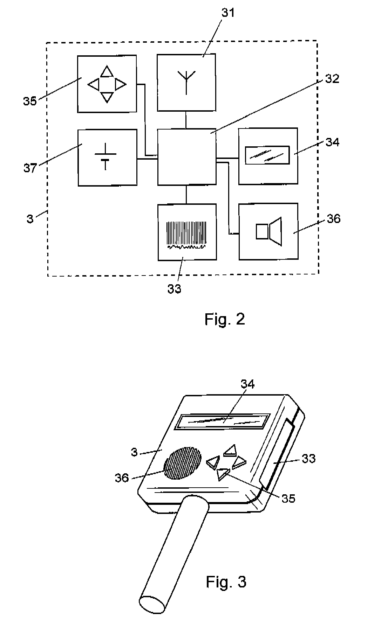

The initialising device (3), shown in figures 2 and 3, includes an operator-friendly manual casing and inside the casing there is an electronic circuit that makes it possible to upload the value of the barcode (21) previously read from the label (22) attached to the object (2) or printed on its surface into the memory (13) of the identifying device (1) being used. For this purpose, the initialising device (3) includes a radio frequency transmitter (31), compliant with the IEEE 802.15.4 standard, in the electronic circuit that is connected to a microcontroller (32) with data storage memory and associated with a barcode reader (33). The barcode reader (33) makes it possible to easily obtain the numerical value of this code (21) for transmission via the transmitter (31) to the identifying device (1) to be programmed. The initialising device (3) has a display screen (34) where the value of the barcode (21) read and/or the value stored In the identifying device (1) can be read to confirm transmission or verify the identifying device (1). These operations can be carried out via operating (35) and on/off controls. The initialising device (3) may also have a sound indicator (36) or similar mechanism to confirm the operation that has been carried out. The initialising device (3) includes a power supply (37).

The different stations (4) with transmission and reception antennas distributed throughout the area of an airport or shopping centre define zones of Influence where the identifying devices (1) of objects (2), sultcases and products connect to the antenna of the nearest station (4), thereby making it possible to determine the location of the object (2) via the antenna of the station (4) with which it communicates. In order to locate a specific object (2), for example a suitcase, it is only necessary for the antennas of the stations (4) to contact the devices (1) under their influence to find out the code stored in the internal memory (13) of the device (1), which matches the barcode (21) of the object (2) or the barcode that was assigned when the object was put under the control of the system. A closer search can be conducted using an initialising device (3) with a reduced range.

Once the nature of the invention has been described in sufficient detail with an example of the preferred embodiment of the invention, it shall be noted that the material, shape, size and layout of the described elements may be modified, provided that this does not imply an alteration of the essential characteristics of the invention shown in the claims below.

## Claims

1. System for locating and taking inventory of objects and merchandise of the type that includes individual identifying devices (1) that communicate using radio frequency and are associated with objects (2) and merchandise, and at least one initialising device (3) to store data in such identifying devices (1), **characterised by** the fact that:
- The identifying device (1) consists of a casing that can be attached to the object (2) or merchandise by removable securing devices (11) and the casing contains a radio frequency transmitter (12), compliant with the IEEE 802.15.4 standard, a memory (13), a battery (14) or electric cell, at least one or two independent energy-saving switches (16a, 16b) and a battery (14) charge sensor (15);
- The initialising device (3) has a casing that contains a radio frequency transmitter (31), compliant with the IEEE 802.15.4 standard, a microcontroller (32) with memory, a barcode reader (33), a display screen (34) and a power source to enable the initialising device (3) to record data from the barcode (21) of the object (2) or merchandise that has been previously read with the barcode reader (33) In the memory (13) of the identifying device (1) for remote consultation by radio frequency transmission;
- And by the fact that it also comprises a network of stations (4) with compatible transmission and reception antennas distributed throughout the area in which the objects (2) or merchandise are to be included in an inventory or located and that allows the approximate location of the identifying device (1) of the object (2) or merchandise to be detected by reading the memory (13) via the antenna of the nearest station (4).

2. System, according to claim 1, is **characterised by** a switch (16a) associated with the securing device (11) that is activated when the securing device (11) is closed or attached to an object or product, while the other switch (16b) is sensitive to radio frequency stimulus directly or indirectly transmitted from an initialising device (3) to activate the power supply when both switches are closed.

3. System, according to claim 1, is **characterised by** securing devices (11) such as a security pin or similar mechanism.

4. System, according to claim 1, is **characterised by** securing devices (11) such an interchangeable security strap.

5. System, according to claim 1, is **characterised by** the initialising device (3) comprising operating and on/off controls (35).

6. System, according to claim 1, is **characterised by** the initialising device (3) comprising a sound, light or analogue indicator (36) to confirm that the operation has been executed.
